(19)

**Europäisches Patentamt**
**European Patent Office**
**Office européen des brevets**

(11) **EP 4 763 385 A1**

(12) **EUROPEAN PATENT APPLICATION**

(43) Date of publication:
24.06.2026 Bulletin 2026/26

(21) Application number: 24221403.9

(22) Date of filing: 19.12.2024

(51) International Patent Classification (IPC):
**B23B 27/04** (2006.01)   **B23B 29/04** (2006.01)

(52) Cooperative Patent Classification (CPC):
**B23B 27/04; B23B 29/043;** B23B 2200/088;
B23B 2200/162; B23B 2200/165; B23B 2200/167;
B23B 2205/02; B23B 2205/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: WALTER AG
72072 Tübingen (DE)

(72) Inventors:
• LÖFFLER, Markus
  72072 Tübingen (DE)
• KLESS, Patrick
  72072 Tübingen (DE)

(74) Representative: Sandvik
Sandvik Intellectual Property AB
811 81 Sandviken (SE)

(54) **AN INDEXABLE CUTTING INSERT, A TOOL HOLDER AND A COMBINATION COMPRISING THE CUTTING INSERT AND THE TOOL HOLDER**

(57) The present invention relates to an indexable cutting insert for turning, a complementary tool holder and a tool comprising the cutting insert and the tool holder. The indexable cutting insert comprises: a two-fold rotational symmetry about an axis of symmetry; a top surface, wherein the top surface comprises a substantially rectangular basic shape with two longitudinal edges and two transverse edges, wherein the top surface comprises a first mounting surface and a second mounting surface spaced from the first mounting surface in a direction parallel to the longitudinal edges; a bottom surface, wherein the bottom surface comprises a first abutment surface, a bottom connecting surface and a second abutment surface, wherein the bottom connecting surface connects the first abutment surface and the second abutment surface, and wherein the second abutment surface is spaced from the first abutment surface in a direction parallel to the longitudinal edges, a side surface connecting the top surface and the bottom surface, wherein an intersection of the top surface and the side surface forms first and second cutting edges positioned along the transverse edges of the top surface. Each of the first and second abutment surfaces comprises a surface normal, which surface normal forms an angle of 5 degrees or more with the axis of symmetry such that the first and second abutment surfaces define a convex basic shape of the bottom surface, wherein the angle is measured in a cross-sectional plane parallel to the axis of symmetry and parallel to the longitudinal edges.

Fig. 1

## Description

TECHNICAL FIELD

The present invention relates to an indexable cutting insert for turning a metal workpiece. The cutting insert comprises a two-fold rotational symmetry about an axis of symmetry; a top surface, wherein the top surface comprises a substantially rectangular basic shape with two longitudinal edges and two transverse edges, wherein the top surfaces comprises a first mounting surface and a second mounting surface spaced from the first mounting surface in a direction parallel to the longitudinal edges; a bottom surface, wherein the bottom surface comprises a first abutment surface, a bottom connecting surface and a second abutment surface, wherein the bottom connecting surface connects the first abutment surface and the second abutment surface, and wherein the second abutment surface is spaced from the first abutment surface in a direction parallel to the longitudinal edges; and a side surface connecting the top surface and the bottom surface, wherein an intersection of the top surface and the side surface forms first and second cutting edges positioned along the transverse edges of the top surface.

The present invention also relates to a tool holder for turning, wherein the tool holder comprises a shaft; a clamping finger, wherein the clamping finger comprises a first clamping surface and a second clamping surface spaced from the first clamping surface by a clamping distance; and an insert seating surface for supporting a bottom surface of an indexable cutting insert, wherein the insert seating surface comprises a first contact surface and a second contact surface spaced from the first contact surface by a contact distance.

Still further, the present invention relates to a tool comprising the tool holder as defined above and the indexable cutting insert as defined above. In this tool, the bottom surface of the indexable cutting insert is received on the insert seating surface of the tool holder such that the first abutment surface is engaged with the first contact surface; wherein the first clamping surface of the clamping finger is engaged with the first mounting surface of the top surface of the cutting insert and the second clamping surface is engaged with the second mounting surface.

BACKGROUND

An indexable cutting insert, a tool holder and a tool of the indexable cutting insert and the tool holder are for example disclosed in EP 4 275 821 A1. Complementary toothed structures are provided on a bottom surface of the cutting insert as well as on a seating surface of the tool holder on the one hand and on a clamping surface of a clamping finger of the toolholder as well as on the top surface of the cutting insert. The teeth of the toothed structures extend in a longitudinal direction of the indexable insert. These toothed structures provided a form fit between the cutting insert and the tool holder. The toothed structures enhance stability of the cutting insert relatively to the tool holder in the transverse direction perpendicular to the longitudinal direction and thus in a direction parallel to the main cutting edges of the cutting insert.

The longitudinal direction parallel to the toothed structures is typically parallel to the feed direction of the turning tool. Thus, during feeding or retracting the tool relatively to a workpiece a position of the cutting insert in the tool holder in the feed direction and opposite is not perfectly fixed. The micro-dynamics of the clamping between the tool holder and the cutting insert inevitably leads to a setting behaviour during the cutting operation. Consequently, the macrodynamic substantially contributes to wear and deformation of all surfaces of the tool holder in engagement with the cutting insert. This in turn leads to a reduction in tool life and a decreasing axial alignment of the cutting insert over service time. Once an appropriate guidance of the cutting insert on the insert seat of the tool holder can no longer be guaranteed, even cutting edge fractures may result.

An object of the present invention is to at least partly obviate at least one of the above-mentioned problems.

SUMMARY

At least one of the above objects is solved by an indexable cutting insert according to claim 1. In order to solve the problem each of the first and second abutment surfaces of the indexable cutting insert defined above comprises a surface normal, which surface normal forms an angle of 5 degrees or more with the axis of symmetry such that the first and second abutment surfaces define a convex basic shape of the bottom surface, wherein the angle is measured in a cross-sectional plane parallel to the axis of symmetry and parallel to the longitudinal edges.

The first and second abutment surfaces of the indexable cutting insert according to the present invention define a bottom surface comprising a generally convex basic shape. This convex basic shape of the bottom surface improves the stability of a positioning of the cutting insert in the tool holder in two ways.

A convex basic shape in combination with a complementary insert seating surface of the tool holder leads to a form fit between the cutting insert and the tool holder in a direction parallel to the longitudinal edges of the cutting insert.

Furthermore, the convex basic shape of the bottom surface during operation of the indexable cutting insert in the tool holder leads to an increase of a frictional force acting between the cutting insert and the tool holder. Due to the dynamics of a turning operation the convex basic shape during operation of the cutting insert leads to a sliding micro-motion guided by the surfaces of the cutting insert and the tool holder engaging each other. This guidance lifts up one of the mounting surface and presses it against the clamping finger. This pressing in turn increases the frictional force between the top surface of the cutting insert and the clamping finger as well as between the bottom surface of the cutting insert and the insert seating surface. Thus, the guidance provided by the first and second abutment surfaces increases a self-locking between the cutting insert and the tool holder.

The indexable cutting insert according to the present invention has a twofold rotational symmetry about the axis of symmetry providing the indexable cutting insert with two main cutting edges. The two cutting edges can be used for the turning or parting off operation one after the other.

The top surface of the cutting insert has a rectangular basic shape. Transverse edges of the top surface are the two shorter edges of the rectangle, while the longitudinal edges are the longer edges of the rectangle. The main cutting edges of the cutting insert are provided at the two transverse edges at an intersection between the top surface of the cutting insert and the side surface.

The angle of 5 degrees or more between the surface normal and the axis of symmetry is measured outside the material of the indexable cutting insert. Measuring the angle in a cross-sectional plane parallel to the axis of symmetry and parallel to the longitudinal edges is equivalent to measuring the angle between a projection of the surface normal and a projection of the axis of symmetry into this cross-sectional plane.

In an embodiment of the present invention, the angle between the surface normal and the axis of symmetry is no more than 20 degrees. Angles larger than 20 degrees lead to difficulties when inserting or taking out the cutting insert from the complementary tool holder. In an embodiment of the present invention, the angle between the surface normal and the axis of symmetry is 15 degrees.

In an embodiment of the present invention, the first and second abutment surfaces are linear in the cross-sectional plane parallel to the axis of symmetry and parallel to the longitudinal edges. The first and second abutment surfaces being linear in the cross-sectional plane allow to implement a point or line contact between the first and second abutment surfaces and corresponding first and second contact surfaces of the insert seating surface of the tool holder.

In an embodiment, wherein the bottom surface in the transverse direction is straight or linear, too, a linear shape of the first and second abutment surfaces in a cross-sectional plane parallel to the axis of symmetry and parallel to the longitudinal edges implies that the first and second abutment surfaces are planar.

In an embodiment of the present invention, the bottom connecting surface is at least in a section convexly curved. A convexly curved bottom connecting surface between the first and second abutment surfaces provides a possibility to smoothly insert the cutting insert into a complementary cutting tool. An at least partly convexly curved surface enables a sliding movement on a complementary concavely curved surface section of the insert seating surface.

In an embodiment of the present invention, the bottom connecting surface is convexly curved over its full extend from the first abutment surface to the second abutment surface. In an embodiment, the bottom connecting surface has a constant radius of curvature.

In an embodiment of the present invention, the radius of curvature of the bottom connecting surface is in a range from 15 mm to 25 mm.

In an embodiment of the present invention the cutting edge distance is 30 mm or less, or is 27 mm or less. In an embodiment of the present invention the cutting edge distance is 27 mm or less and the radius of curvature in Millimetres is in a range from $r_{min}$ to $r_{max}$,

wherein $r_{min} = \frac{1}{2}(-0.007\, d_c{}^2 + 1.23 \cdot d_c - 28)$

and $r_{max} = \frac{1}{2}(-0.007\, d_c{}^2 + 0.95 \cdot d_c - 6.2)$ ,

and wherein $d_c$ is the cutting edge distance in Millimetres.

As it has been described before with respect to the contact between the bottom surface and the insert seating surface, it is advantageous once a contact or engagement between the top surface and the clamping finger of the tool holder is a point or line contact.

In an embodiment, in order to provide a possibility to generate a point or line contact between the first mounting surface and the first clamping surface of the clamping finger as well as the second mounting surface and the second clamping surface of the clamping finger, the first and second mounting surfaces in the cross-sectional plane parallel to the axis of symmetry and parallel to the longitudinal edges are linear.

In an embodiment of the present invention, the first and second mounting surfaces of the indexable cutting insert each form an angle of 90 degrees or less with the axis of symmetry, so that the first and second mounting surfaces define a flat or concave basic shape of the top surface, wherein the angle is measured in a cross-sectional plane parallel to the axis of symmetry and parallel to the longitudinal edges.

The angle of 90 degrees or less between the first and second mounting surface and the axis of symmetry is measured outside the material of the indexable cutting insert. Measuring the angle in a cross-sectional plane parallel to the axis of symmetry and parallel to the longitudinal edges is equivalent to measuring the angle between a projection of the surface normal and a projection of the axis of symmetry into this cross-sectional plane.

In an embodiment, each of the first abutment surface and the second abutment surface comprises either a groove or a ridge extending parallel to the longitudinal edges, wherein the groove or the ridge comprises two flanks.

In an embodiment, each of the first abutment surface and the second abutment surface comprises either a plurality of grooves or a plurality of ridges extending parallel to the longitudinal edges.

In an embodiment, each of the first mounting surface and the second mounting surface comprises either a groove or a ridge extending parallel to the longitudinal edges, wherein the groove or the ridge comprises two flanks.

In an embodiment, each of the first mounting surface and the second mounting surface comprises either a plurality of grooves or a plurality of ridges extending parallel to the longitudinal edges.

The indexable cutting insert according to the present invention is a cutting insert suitable for metal cutting in turning operations. Preferably, the cutting insert is suitable for parting of and grooving of a rotating workpiece. In an embodiment, the workpiece has rotational symmetry. For example, the cutting insert may be used in operations comprising mainly cutting in the radial direction of a rotating workpiece. Embodiments of the cutting insert may be used in operations involving cutting along the longitudinal axis of a rotating workpiece. The cutting insert is especially beneficial in operations that exert forces on the cutting insert in a direction parallel to the longitudinal edges.

The cutting insert is suitable for cutting metal workpieces such as steel. In an embodiment, the indexable cutting insert comprises a wear resistant material such as for example coated or noncoated cemented carbide, cermet, ceramic, diamond or CBN.

At least one of the above objects is also solved by a tool holder according to claim 9. To solve the problem, each of the first and second contact surfaces of the tool holder as defined above comprises a surface normal, which surface normals in a cross-sectional plane intersecting the clamping finger and the insert seating surface form an angle of 170 degrees or less with each other such that the first and second contact surfaces define a concave basic shape of the insert seating surface.

The angle between the surface normals of the first and second contact surfaces is measured outside the material of the indexable cutting insert. Measuring the angle in the cross-sectional plane intersecting the clamping finger and the insert seating surface is equivalent to measuring the angle between a projection of the surface normals into this cross-sectional plane.

A basic concave design of the insert seating surface is complementary to the basic convex design of the bottom surface of the cutting insert according to the present invention. The concave basic shape of the insert seating surface supports the self-locking between the cutting insert and the tool holder.

As described in detail above with respect to the indexable cutting insert according to the present invention, it is desirable to establish point contacts or line contacts between the cutting insert and the tool holder.

Thus, in an embodiment of the present invention the first contact surface is convex in the common cross-sectional plane. Keeping in mind that the insert seating surface has a concave basic shape, a locally convex first contact surface engages the abutment surface of the cutting insert at a single point or along a line. Such a line contact is well established once in an embodiment the first contact surface of the tool holder is convex and the first abutment surface of the cutting insert is linear in the cross-sectional plane parallel to the axis of symmetry and parallel to the longitudinal edges.

In an embodiment, the first contact surface is convex in the cross-sectional plane intersecting the clamping finger and the insert seating surface and the second contact surface is linear in the cross-sectional plane. This embodiment reduces the manufacturing requirements involved with a convex shape of the contact surfaces and provides a certain neutrality with respect to production tolerances.

In an embodiment the clamping finger and the insert seating surface are integrally formed.

In an embodiment the tool holder comprises a clamping screw and an internal thread, wherein the clamping screw extends through the clamping finger and engages in an internal thread, and wherein a rotational motion of the clamping screw pushes the clamping finger towards the insert seating surface.

In an embodiment, each of the first contact surface and the second contact surface comprises either a groove or a ridge extending parallel to the longitudinal edges, wherein the groove or the ridge comprises two flanks.

In an embodiment, each of the first contact surface and the second contact surface comprises either a plurality of grooves or a plurality of ridges extending parallel to the longitudinal edges.

In an embodiment, each of the first clamping surface and the second clamping surface comprises either a groove or a ridge extending parallel to the longitudinal edges, wherein the groove or the ridge comprises two flanks.

In an embodiment, each of the first clamping surface and the second clamping surface comprises either a plurality of grooves or a plurality of ridges extending parallel to the longitudinal edges.

The tool holder according to the present invention is a tool holder suitable for metal cutting in turning operations. Preferably, the tool holder is suitable for parting of and grooving of a rotating workpiece. A tool holder for parting off and grooving is sometimes denoted as a blade. In an embodiment, the workpiece has rotational symmetry.

For example, the tool holder may be used in operations comprising mainly cutting in the radial direction of a rotating workpiece. Embodiments of the tool holder may be used in operations involving cutting along the longitudinal axis of a rotating workpiece. The tool holder is especially beneficial in operations that exert forces on the tool holder in a direction parallel to the longitudinal edges.

The tool holder is suitable for cutting metal workpieces such as steel. In an embodiment, the tool holder is of tool steel.

At least one of the above objects is also solved by a tool for turning comprising the tool holder and the indexable cutting insert according to independent claim 12. The tool comprises an embodiment of the tool holder as described above and an embodiment to the indexable cutting insert as described above, wherein the bottom surface of the indexable cutting insert is received on the insert seating surface of the tool holder such that the first abutment surface is engaged with the first contact surface and the second abutment surface is engaged with the second contact surface; and wherein the first clamping surface of the clamping finger is engaged with the first mounting surface of the top surface of the cutting insert and the second clamping surface is engaged with the second mounting surface.

Once the tool comprising the tool holder and the indexable cutting insert is considered the cross-section plane intersecting the insert seating surface and the clamping finger discussed above is identical with the cross-sectional plane parallel to the axis of symmetry of the cutting insert and parallel to the longitudinal cutting edges.

Due to the design of the tool holder and the indexable cutting insert, the cutting insert is clamped by a so-called 4-point support. Considered in a direction parallel to the edges of the cutting insert, the cutting insert is clamped at four points, namely at the first abutment surface, at the second abutment surface, at the first mounting surface and at the second mounting surface.

To provide the 4-point support, the clamping finger in an embodiment is elastically deformable and the cutting insert, the insert seating surface and the clamping finger are arranged and positioned such that during a clamping operation, the clamping finger first engages the first contact surface which is the contact surface closest to the operable cutting edge and then engages the second contact surface.

Establishing a point contact or a line contact helps to avoid an over-determination of engagement between the tool holder and the cutting insert.

When considered in a cross-sectional plane parallel to the longitudinal edges of the cutting insert and parallel to the axis of symmetry, engagement between the clamping finger and the top surface of the cutting insert as well as between the insert seating surface and the bottom surface of the cutting insert is best described as points.

There are a number of different ways to implement a defined point or line contact between the surfaces involved. In an embodiment, one of the two surfaces in engagement with each other is a convex surface while the other surface is a linear or planar surface. Thus, according to an embodiment the first contact surface is convex in the cross-sectional plane parallel to the axis of symmetry and parallel to the longitudinal edges and the first abutment surface is linear in the cross-sectional plane parallel to the axis of symmetry and parallel to the longitudinal edges.

In an embodiment, one of the two surfaces in engagement with each other is a concave surface and the other surface is a convex surface, wherein the two surfaces have different radii of curvature.

In an embodiment, both of the two surfaces in engagement with each other are linear in the cross-sectional plane parallel to the axis of symmetry and parallel to the longitudinal edges, but are not parallel to each other. In an embodiment according to the present invention, the second contact surface of the tool holder and the second abutment surface of the cutting insert are linear in the cross-sectional plane parallel to the axis of symmetry and parallel to the longitudinal edges, wherein the two linear lines are tilted with respect to each other. In an embodiment, the first camping surface of the clamping finger and the first mounting surface of the cutting insert are linear in the cross-sectional plane parallel to the axis of symmetry and parallel to the longitudinal edges, wherein the two linear lines are tilted with respect to each other, and the second camping surface of the clamping finger and the second mounting surface of the cutting insert are linear in the cross-sectional plane parallel to the axis of symmetry and parallel to the longitudinal edges, wherein the two linear lines are tilted with respect to each other.

In an embodiment of the present invention, the first abutment surface and the first contact surface are arranged and positioned such that a first contact along a line is established, and wherein the second abutment surface and the second contact surface are arranged and positioned such that a second contact along a line is established.

The two line contacts between the bottom surface of the cutting insert and the insert seating surface of the tool holder according to an embodiment of the present invention are established at a longitudinal position of the cutting insert where the contact surfaces of the cutting insert form an angle of 5 degrees or more relative to the axis of symmetry, when measured in a projection into the cross-sectional plane parallel to the axis of symmetry and parallel to the longitudinal edges of the cutting insert.

In an embodiment of the present invention, a point contact or a line contact is also established between the first clamping surface of the clamping finger and the first mounting surface of the top surface of the cutting insert as well as between the second clamping surface and the second mounting surface.

In an embodiment of the present invention, the first clamping surface and the first mounting surface are arranged and positioned such that a contact along a line perpendicular to the longitudinal edges of the cutting insert is established, and wherein the second clamping surface and the second mounting surface are arranged and positioned such that a contact along a line perpendicular to the longitudinal edges is established.

In an embodiment of the present invention, a first contact established between the first abutment surface of the cutting insert and the first contact surface of the tool holder and a second contact established between the second abutment surface of the cutting insert and the second contact surface of the tool holder are the only contacts of the bottom surface and the insert seating surface of the tool holder.

In an embodiment of the present invention, a first contact established between the first mounting surface of the cutting insert and the first clamping surface of the clamping finger and a second contact established between the second mounting surface of the cutting insert and the second clamping surface of the clamping finger are the only contacts of the top surface of the cutting insert and the clamping finger.

In an embodiment of the present invention, the tool comprises an abutment distance between a point or a line of contact of the first abutment surface with the first contact surface and a point or a line of contact of the second abutment surface with the second contact surface in a direction parallel to the longitudinal edges. In an embodiment, the abutment distance is larger than three quarters of a cutting edge distance between the first cutting edge and the second cutting edge in a direction parallel to the longitudinal edges. Increasing the abutment distance enhances the positional stability of the indexable cutting insert at the toolholder.

In an embodiment of the present invention, the tool comprises a mounting distance between a point or a line of contact of the first mounting surface with the first clamping surface and a point or a line of contact of the second mounting surface with the second clamping surface in a direction parallel to the longitudinal edges. In an embodiment, the mounting distance is larger than three quarters of the cutting edge distance between the first cutting edge and the second cutting edge in a direction parallel to the longitudinal edges. Increasing the mounting distance enhances the positional stability of the indexable cutting insert at the toolholder.

In an embodiment of the present invention, the tool holder comprises a stop surface, wherein the stop surface is engaged with the side surface of the cutting insert. In particular, the stop surface is engaged with a section of the side surface forming the first cutting edge or the second cutting edge. In such an embodiment, a number of five contact positions is established between the cutting insert and the tool holder.

The five contact positions define a controlled over-determination of the system comprising the cutting insert and the tool holder.

In an embodiment, each of the first contact surface and the second contact surface comprises either at least one groove or at least one ridge extending parallel to the longitudinal edges, wherein the groove or the ridge comprises two flanks, wherein each of the first abutment surface and the second abutment surface comprises either a groove or a ridge extending parallel to the longitudinal edges, wherein the at least one groove or ridge comprises two flanks, wherein the at least one groove or ridge of the first and second contact surfaces are complementary to the at least one groove or ridge of the first and second abutment surfaces such that the flanks of the at least one groove or ridge of the first and second contact surfaces engage the flanks of the at least one groove or ridge of the first and second abutment surfaces.

In an embodiment, each of the first clamping surface and the second clamping surface comprises either at least one groove or at least one ridge extending parallel to the longitudinal edges, wherein the groove or the ridge comprises two flanks, wherein each of the first mounting surface and the second mounting surface comprises either a groove or a ridge extending parallel to the longitudinal edges, wherein the at least one groove or ridge comprises two flanks, wherein the at least one groove or ridge of the first and second clamping surfaces are complementary to the at least one groove or ridge of the first and second mounting surfaces such that the flanks of the at least one groove or ridge of the first and second clamping surfaces engage the flanks of the at least one groove or ridge of the first and second mounting surfaces.

BRIEF DESCRIPTION OF THE DRAWINGS

Further advantages, features and applications of the present disclosure will become apparent from the following description of embodiments and the corresponding Figures attached. The foregoing as well as the following detailed description of the embodiments will be better understood when read in conjunction with the appended drawings. It should be understood that the embodiments depicted are not limited to the precise arrangements and instrumentalities shown.

Figure 1   is an isometric top view of an indexable cutting insert according to an embodiment of the present invention.

Figure 2   is an isometric bottom view of the indexable cutting insert of Figure 1.

Figure 3   is a side view of the indexable cutting insert of Figures 1 and 2.

Figure 4   is an isometric to view of a tool comprising a tool holder and the cutting insert of Figures 1 to 3.

Figure 5   is a cutaway and enlarged side view of the tool holder of Figure 4.

Figure 6   is a cutaway and enlarged isometric top view of the tool holder of Figures 4 and 5.

Figure 7   is a cutaway and enlarged side view of the tool of Figure 4.

Figure 8   is a cutaway and enlarged front view of the tool of Figure 4.

Figure 9    is a cutaway and enlarged cross-sectional view of the tool along line A-A of Figure 7.

Figure 10    is an isometric top view of an indexable cutting insert according to a second embodiment of the present invention.

Figure 11    is an isometric bottom view of the indexable cutting insert of Figure 10.

Figure 12    is a side view of the indexable cutting insert of Figures 10 and 11.

Figure 13    is an isometric to view of a tool comprising a tool holder and the cutting insert of Figures 10 to 12.

Figure 14    is a cutaway and enlarged side view of the tool holder of Figure 13.

Figure 15    is a cutaway and enlarged isometric top view of the tool holder of Figures 13 and 14.

Figure 16    is a cutaway and enlarged side view of the tool of Figure 13.

Figure 17    is a cutaway and enlarged front view of the tool of Figure 13.

Figure 18    is a cutaway and enlarged cross-sectional view of the tool along line A-A of Figure 16.

DETAILED DESCRIPTION

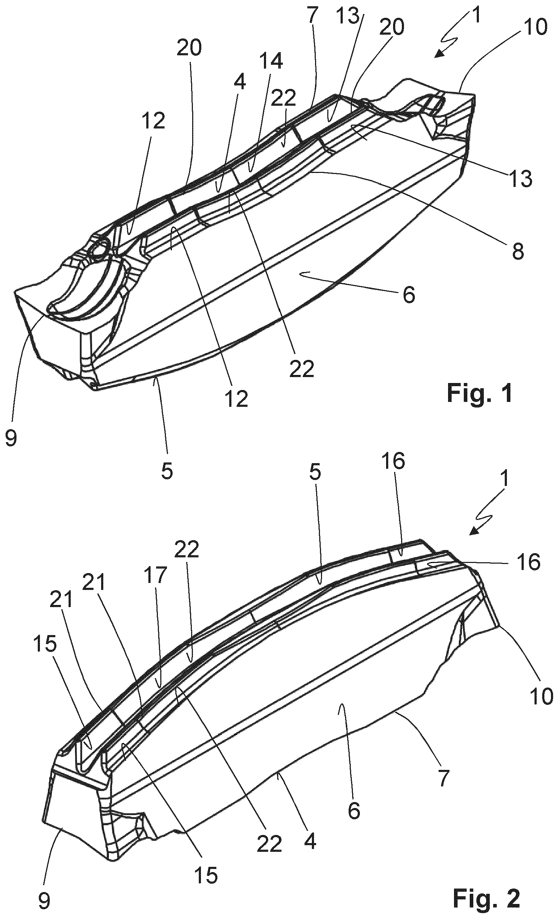

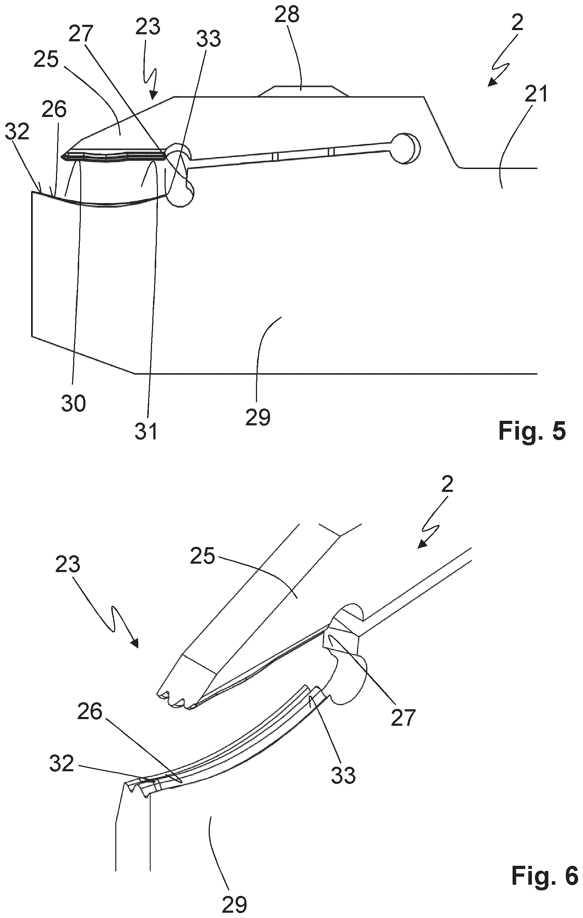

Figures 1 to 9 illustrate a first embodiment of an indexable cutting insert 1, a toolholder 2 and a tool 3.

The cutting insert without the tool holder 2 is shown in Figures 1 to 3. The indexable cutting insert 1 comprises a top surface 4, a bottom surface 5 and a side surface 6 connecting the top surface 4 and the bottom surface 5. When looked at in a top view, the top surface 4 has an essentially rectangular basic shape with two longitudinal edges 7, 8 and two transverse edges 9, 10. The longitudinal edges 7, 8 and the transverse edges 9, 10 are defined by an intersection of the side surface 6 and the top surface 4. The two transverse edges 9, 10 are the major cutting edges of the indexable cutting insert 1.

In order to be indexable, the cutting insert 1 has a two-fold rotational symmetry about an axis of symmetry 11. By rotating the cutting insert 1 by 180° about the axis of symmetry 11, the two cutting edges 9, 10 of the cutting insert 1 can be used one after the other until both of them are worn. The top surface 4 comprises a first mounting surface 12 and a second mounting surface 13. The first mounting surface 12 is spaced from the second mounting surface 13 in a direction parallel to the longitudinal edges 7, 8.

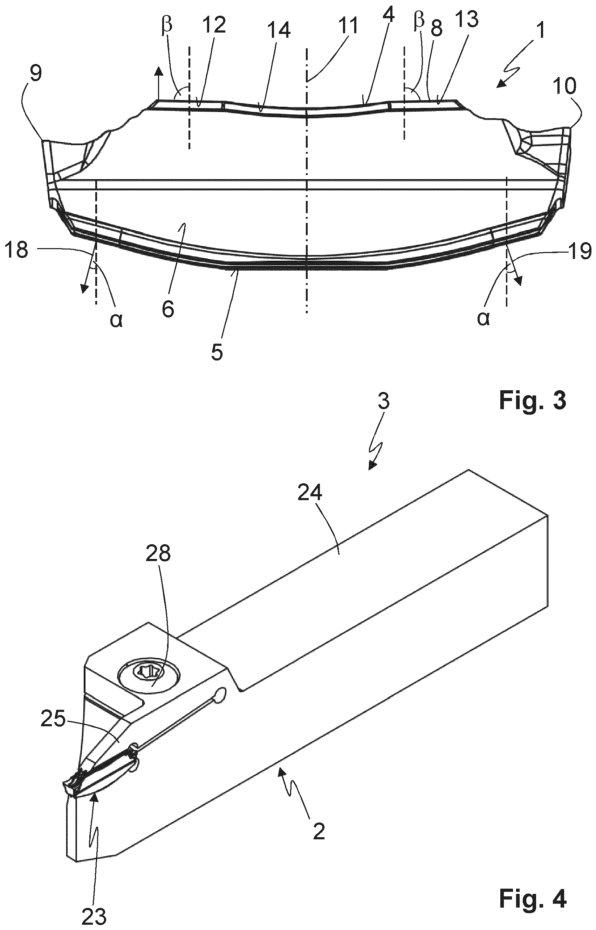

In the embodiment of Figures 1 to 9, the mounting surfaces 12, 13 are connected by a top connecting surface 14 comprising a curved shape in a cross-section parallel to the longitudinal edges 7, 8 and parallel to the axis of symmetry 11. This curved shape of the top connecting surface 14 is concave and well visible in the side view of Figure 3. The first mounting surface 12 and the second mounting surface 13 in the embodiment of Figures 1 to 9 are planar surfaces, which in a cross-section parallel to the longitudinal edges 7, 8 and parallel to the axis of symmetry 11 form a line. This line shape is visible in the side view of Figure 3.

The planar first and second mounting surfaces 12, 13 each form an angle $\beta$ of 89° with the axis of symmetry 11 such that the first and second mounting surfaces 12, 13 define a concave basic shape of the top surface 4 of the cutting insert 1. The angle $\beta$ between the first and second mounting surfaces and the axis of symmetry 11 is measured in a cross-sectional plane parallel to the axis of symmetry 11 and parallel to the longitudinal edges 8, 9. I.e. the angle $\beta$ is measured in a projection into this cross-sectional plain.

The bottom surface 5 comprises a first abutment surface 15, a second abutment surface 16 and a bottom connecting surface 17. In the embodiment of Figures 1 to 9, the first abutment surface 15 and the second abutment surface 16 are planar such that in a cross-section parallel to the longitudinal edges 7, 8 and parallel to the axis of symmetry 11, the first and second abutment surfaces 15, 16 are linear. The bottom connecting surface 17 connects the first abutment surface 15 and the second abutment surface 16, which abutment surfaces 15, 16 are distanced from each other in a direction parallel to the longitudinal edges 7, 8.

The first abutment surface 15 as well as the second abutment surface 16 each comprise a surface normal 18, 19, which surface normal 18, 19 forms an angle $\alpha$ of 15° with the axis of symmetry 11. The angle $\alpha$ is measured in a projection of the surface normal 18, 19 into a cross-sectional plane parallel to the axis of symmetry and parallel to the longitudinal edges. As a consequence of the surface normals 18, 19 of the first and second abutment surfaces 15, 16 forming non-zero angles $\alpha$ with respect to the axis of symmetry 11, the two abutment surfaces 15, 16 define a convex basic shape of the bottom surface 5. The bottom connecting surface 17 is partly convexly curved with a flattening around the axis of symmetry 11.

Furthermore, the top surface 4 as well as the bottom surface 5 each comprise ridges whose flanks carry the first and second mounting surfaces 12, 13 and the first and second abutment surfaces 15, 16, respectively. These ridges serve to provide a lateral positioning of the cutting insert 1 once inserted into the insert seat 23 of the tool holder 2.

The top surface comprises a pair of top ridges 20 and the bottom surface 5 comprises a pair of bottom ridges 21. Each of the ridges 20, 21 comprises two flanks 22. Thus, the first and second mounting surfaces 12, 13 as well as the first and second abutment surfaces 15, 16 are spread over four surface sections established on these flanks 22 each.

In the embodiment of Figures 1 to 9, the tool-holder 2 comprises a shaft 24, a clamping finger 25 and an insert seating surface 26. The clamping finger 25, the insert seating surface 26 and a stop surface 27 at the tool holder 2 define the insert seat 23 to accommodate the cutting insert 1.

In order to provide a stable and well-defined positioning of the indexable cutting insert 1 at the toolholder 2, the insert seat 23 of the toolholder 2 has a design being complementary to the design of the top surface 4 and the bottom surface 5 of the cutting insert 1.

In the embodiment illustrated in Figures 4 to 9, the toolholder 2 further comprises a clamping screw 28. The clamping screw 28 reaches through a section of the clamping finger 25 and engages with an internal thread in the body 29 of the toolholder 2. When screwed int the body 29, the clamping screw 28 pushes the clamping finger 25 towards the insert seating surface 26.

In order to define a complementary shape of the insert seat 23 accommodating the cutting insert 2, the design of the clamping finger 25 and the design of the insert seating surface 26 must match the design of the top surface 4 and the bottom surface 5 of the cutting insert 1.

Thus, the clamping finger 25 comprises a first clamping surface 30 and a second clamping surface 31. The first clamping surface 30 and the second clamping surface 31 are spaced from each other in a direction parallel to the longitudinal edges 7, 8 of the cutting insert 1 once mounted in the insert seat 23. In the embodiment of Figures 4 to 9, the first and second clamping surfaces 30, 31 are provided by planar surfaces being linear in a cross-sectional plane intersecting the clamping finger 25 and the insert seating surface 26 and being parallel to the axis of symmetry 11 and parallel to the longitudinal edges 7, 8 of the cutting insert 1 once mounted on the insert seat 23.

The insert seating surface 26 comprises a first contact surface 32 and a second contact surface 33. The first contact surface 32 and the second contact surface 33 are spaced from each other in a direction parallel to the first and second longitudinal edges 7, 8 of the cutting insert 1 once accommodated on the insert seat 23 of the toolholder 2.

In the embodiment of Figures 4 to 9, the first contact surface 32 is formed by a transitional surface section being convex in a cross-sectional view intersecting the clamping finger 25 and the insert seating surface 26, in particular in a cross-sectional plane parallel to the longitudinal edges 7, 8 and parallel to the axis of symmetry 11 of the cutting insert 1 once accommodated on the insert seat 23.

In contrast, the second contact surface 33 of the insert seating surface 26 is planar and has a linear shape in the cross-sectional plane as defined with respect to the above considerations relating to the first contact surface 32. Each of the first and second contact surfaces 32, 33 comprises a surface normal 34, which surface normal 34 in a cross-sectional plane intersecting the clamping finger and the insert seating surface form an angle of 155° with each other such that the first and second contact surfaces 32, 33 define a concave basic shape of the insert seating surface 26.

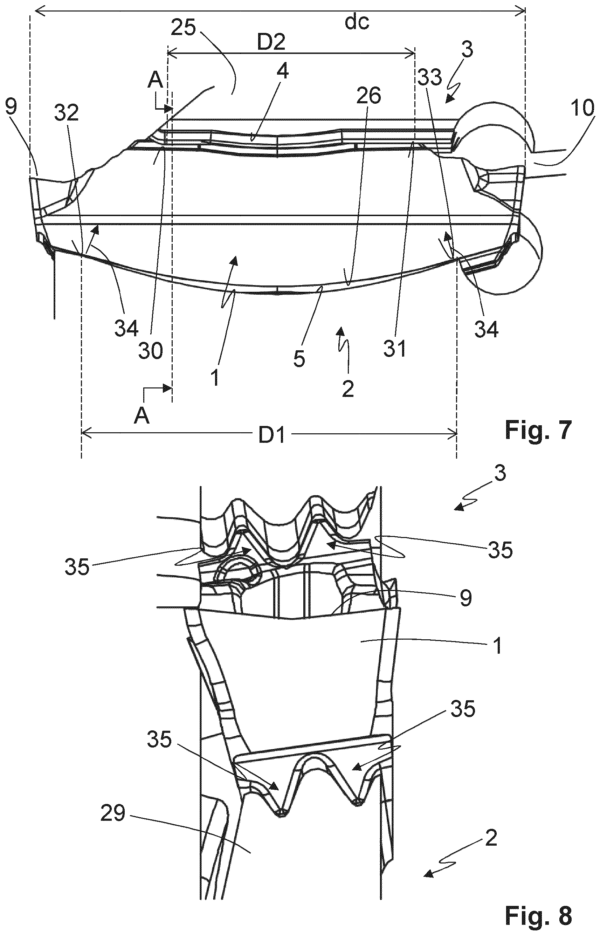

The advantages of the complementary designs of the top surface 4 and the bottom surface 5 of the cutting insert on the one hand and the clamping finger 25 and the insert seating surface 26 of the toolholder 2 on the other hand are now described with reference to Figures 7 to 9. Figures 7 to 9 illustrate the tool 2 in enlarged drawings including the toolholder 2 and the cutting insert 1.

The clamping concept for stably and precisely fixing the cutting insert 1 in the insert seat 23 relies on a so-called five-point contact, which is overdetermined in a controlled manner. A first contact is established by engagement of the first clamping surface 30 of the clamping finger 25 with the first mounting surface 12 of the top surface 4 of the cutting insert 1. The second contact is established by engagement of the second clamping surface 31 with the second mounting surface 13. The third contact is provided by engagement of the first abutment surface 15 and the first contact surface 32 of the insert seating surface 26. The fourth contact is provided by engagement of the second abutment surface 13 of the cutting insert 1 and the second contact surface 33 of the insert seating surface 26 of the toolholder 2. The fifth contact is established between the stop surface 27 of the toolholder 2 and the side surface 6 of the cutting insert 1.

In order to be able to establish the four contacts between the top surface 4 of the clamping insert and the clamping finger 25 as well as between the bottom surface 5 and the insert seating surface 23 of the toolholder 2 in a defined manner, the clamping finger 25 provides a certain flexibility. Once the first clamping surface 30 engages with the first mounting surface 12 of the cutting insert 1 and still further tightening the clamping screw 25, the clamping finger 22 starts bending until the second clamping surface 31 engages with the second mounting surface 13 of the cutting insert 1.

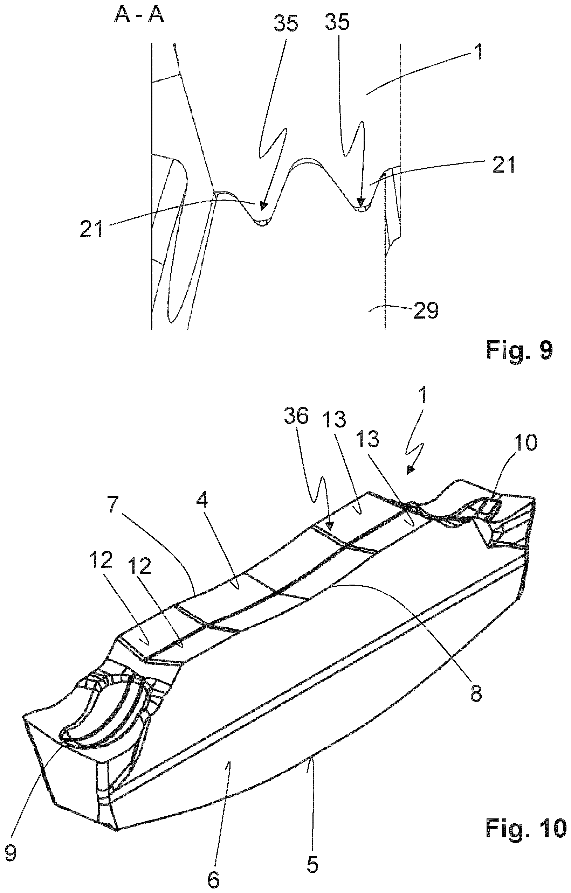

Due to the distribution of the abutment surfaces, the contact surfaces, the mounting surfaces and the clamping surfaces over the flanks 22 of the ridges 20, 21 of the cutting insert 1 and the flanks 22 of the grooves 35 in the clamping finger 25 and the insert seating surface 26 a contact between the cutting insert 1 and the toolholder 2 is established only on these flanks. The combination of grooves 35 and ridges 20, 21 provide the required positioning in a transverse direction, i.e. in a direction essentially parallel to the cutting edges 9, 10. This concept of the transverse positioning is illustrated in Figure 9.

Furthermore, the local shape of the surface pairs provided, by the first mounting surface 12 and the first clamping surface 30, the second mounting surface 13 and the second clamping surface 31, the first abutment surface 15 and the first contact surface 32 as well as the second abutment surface 16 and the second contact surface 33, well define a line contact between the surfaces of each of these pairs.

The first and second clamping surfaces 30, 31 are planar surfaces which are tilted with respect to each other (i.e. these planar surfaces are non-parallel). Consequently, a line contact is established for each of these two pairs of surfaces. The first contact surface 32 is locally convex introducing a small protrusion on the insert seating surface 26. This first contact surface 32 engages with the planar first abutment surface 15 defining a line contact. Finally the planar second contact surface 33 engages with the second planar second abutment surface 16. The two planes defined by these surfaces are also tilted with respect to each other leading to line contacts.

The design of the bottom surface 5 of the cutting insert 1 and the insert seating surface 26 of the tool holder 2 is also complementary with respect to a second aspect. The basic shape of the bottom surface 5 defined by the first abutment surface 15 and the second abutment surface 16 is convex and the basic shape of the insert seating surface 26 defined by the first and second contact surfaces 32 and 23 is concave. These complementary convex and concave designs are responsible for two effects.

First, a form fit in a direction parallel to the longitudinal edges 7, 8 of the cutting insert 1 is established.

Second, the convex basic shape of the bottom surface 5 during operation of the indexable cutting insert 1 in the tool holder 2 leads to an increase of a frictional force acting between the cutting insert 1 and the tool holder 2. Due to the dynamics of a turning operation the convex basic shape leads to a sliding micro-motion of the insert 1 on the concave basic shape of the insert seating surface 26. The sliding micro-motion is guided by the surfaces of the cutting insert and the tool holder engaging each other. This guidance lifts up the second mounting surface 13 and presses the second mounting surface 13 against the clamping finger 25. This pressing in turn increases the frictional force between the top surface 4 of the cutting insert 1 and the clamping finger 25 as well as between the bottom surface 5 of the cutting insert 1 and the insert seating surface 26. Thus, the guidance provided by the first and second abutment surfaces 15, 16 in cooperation with the first and second contact surfaces 32, 33 increases a self-locking between the cutting insert 1 and the tool holder 2.

Finally the complementary design of the convex basic shape of the clamping finger 25 and the concave basic shape of the top surface 4 as well as the convex basic shape of the bottom surface 5 and the concave basic shape of the insert seating surface 26 allow an easy inserting of the insert 1 into the insert seat 23 during mounting operation. The insert 1 slides into the seat 23 on a circular arch defined by the complementary surfaces.

An abutment distance D1 between the line of contact of the first abutment surface 15 with the first contact surface 32 and the line of contact of the second abutment surface 16 with the second contact surface 33 in a direction parallel to the longitudinal edges 7, 8 is larger than three quarters of a cutting edge distance $d_c$ between the first cutting edge 9 and the second cutting edge 10 in the direction parallel to the longitudinal edges 7, 8.

Furthermore the tool 3 comprises a mounting distance D2 between the line of contact of the first mounting surface 12 with the first clamping surface 30 and the line of contact of the second mounting surface 13 with the second clamping surface 31 in the direction parallel to the longitudinal edges 7, 8, wherein the mounting distance D2 is larger than three quarters of the cutting edge distance $d_c$.

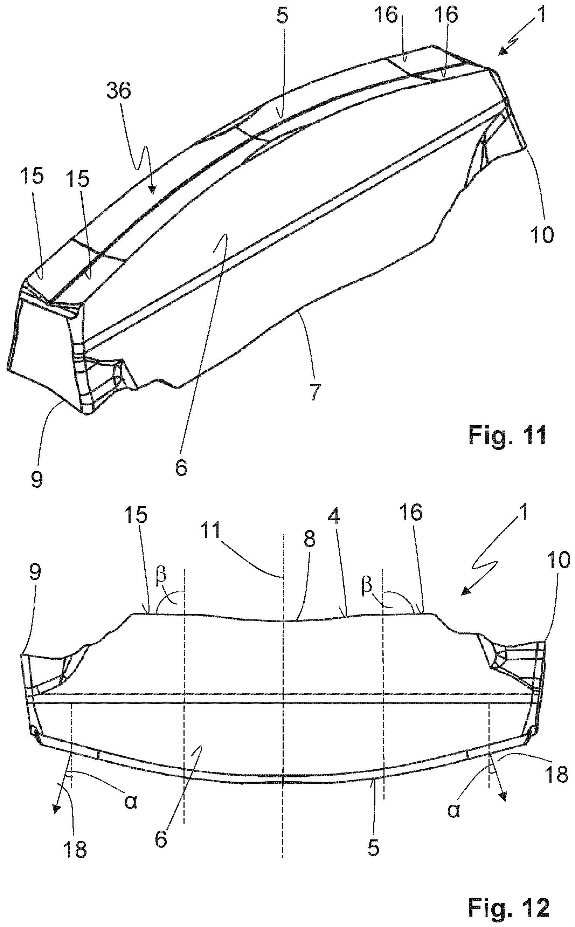

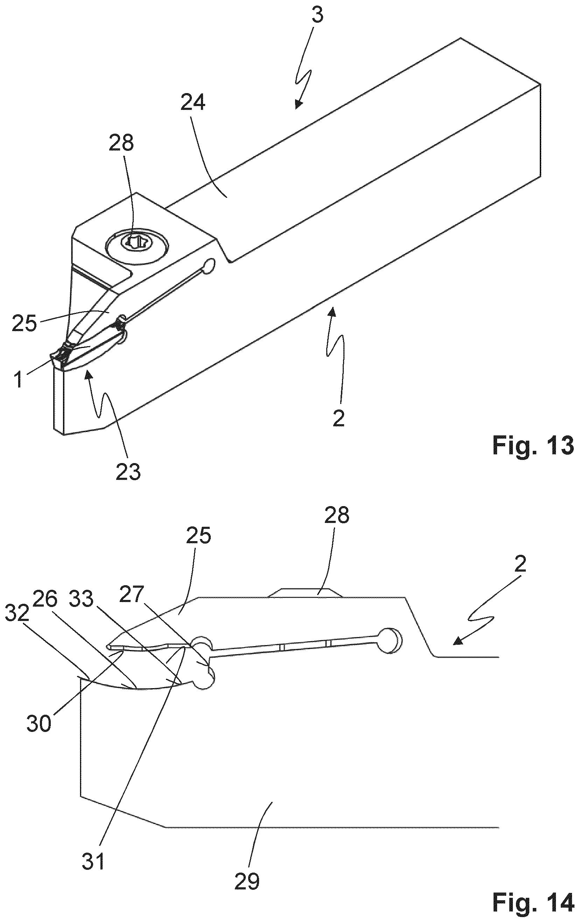

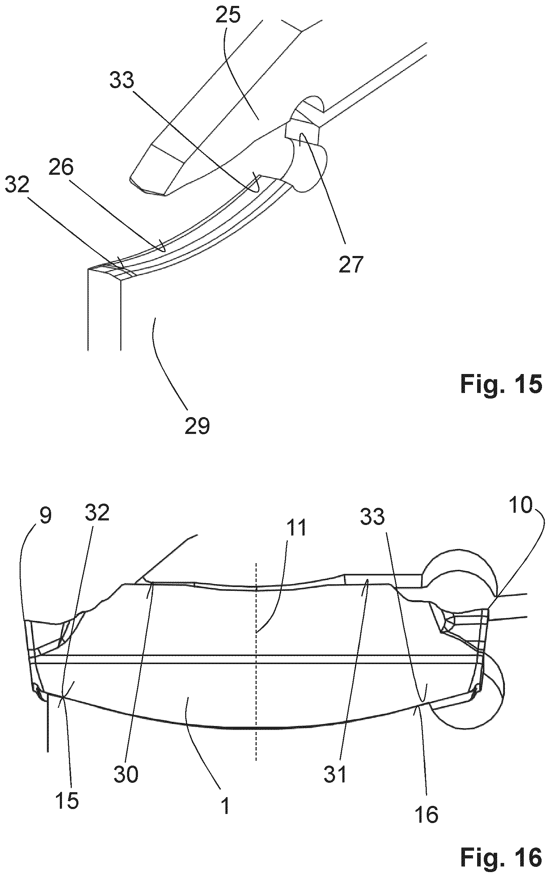

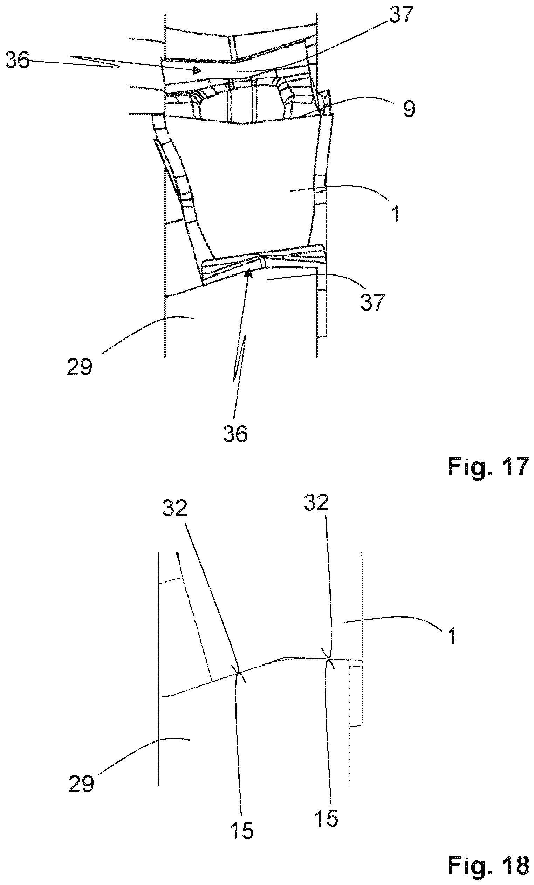

The embodiment of a cutting insert 1, a toolholder 2 as well as a tool 3 illustrated with reference to Figures 10 to 18 differs from the embodiment explained above in detail with reference to Figures 1 to 9 in that instead of two ridges 20, 21 and two grooves 35 provided on the surfaces of the cutting insert and the toolholder, the toolholder 2 comprises a prismatic shape of the top surface 4 and the bottom surface 5. Thus, the points of contact between the cutting insert 1 and the toolholder 2 are established on the flanks 22 of a groove 36 on the top surface 5 and on the bottom surface 6 of the cutting insert 1 and by the respective flanks of a ridge 37 provided on the clamping finger 22 and the insert seating surface 23 of the toolholder 2.

For the purposes of the original disclosure, it is pointed out that all features as they become apparent to a person skilled in the art from the present description, the drawings and the claims, even if they have been specifically described only in connection with certain further features, can be combined both individually and in any desired combinations with other of the features or groups of features disclosed herein, unless this has been expressly excluded or technical circumstances render such combinations impossible or pointless. A comprehensive, explicit description of all conceivable combinations of features is omitted here only for the sake of brevity and readability of the description.

While the invention has been illustrated and described in detail in the drawings and the foregoing description, this illustration and description are merely exemplary and are not intended to limit the scope of protection as defined by the claims. The invention is not limited to the embodiments disclosed.

Variations of the disclosed embodiments will be apparent to those skilled in the art from the drawings, description and appended claims. In the claims, the word "comprising" does not exclude other elements or steps, and the indefinite article "a" does not exclude a plurality.

The mere fact that certain features are claimed in different claims does not exclude their combination. Reference signs in the claims are not intended to limit the scope of protection.

LIST OF REFERENCE NUMBERS

[0101]

| 1 | cutting insert |
|---|---|
| 2 | toolholder |
| 3 | tool |
| 4 | top surface |
| 5 | bottom surface |
| 6 | side surface |
| 7, 8 | longitudinal edge |
| 9, 10 | cutting edges |
| 11 | axis of symmetry |
| 12 | first mounting surface |
| 13 | second mounting surface |
| 14 | top connecting surface |
| 15 | first abutment surface |
| 16 | second abutment surface |
| 17 | bottom connecting surface |
| 18 | surface normal of the first abutment surface |
| 19 | surface normal of the second abutment surface |
| 20 | top ridge |
| 21 | bottom ridge |
| 22 | flank |
| 23 | insert seat |
| 24 | shaft |
| 25 | clamping finger |
| 26 | insert seating surface |
| 27 | stop surface |
| 28 | clamping screw |
| 29 | tool body |
| 30 | first clamping surface |
| 31 | second clamping surface |
| 32 | first contact surface |
| 33 | second contact surface |
| 34 | surface normal |
| 35 | groove |
| 36 | groove |
| 37 | ridge |
| $\alpha$ | angle between each of surface normals of the first and second abutment surfaces and the axis of symmetry 11 |
| $\beta$ | angle between each of the first and second mounting surfaces and the axis of symmetry |
| D1 | abutment distance |
| D2 | mounting distance |
| $d_c$ | cutting edge distance |

**Claims**

1. An indexable cutting insert (1) for turning, the cutting insert (1) comprising

a two-fold rotational symmetry about an axis of symmetry (11);
a top surface (4),

wherein the top surface (4) comprises a substantially rectangular basic shape with two longitudinal edges (7, 8) and two transverse edges (9, 10),
wherein the top surface (4) comprises a first mounting surface (12) and a second mounting surface (13) spaced from the first mounting surface (12) in a direction parallel to the longitudinal edges (7, 8);

a bottom surface (5),

wherein the bottom surface (5) comprises a first abutment surface (15), a bottom connecting surface (17) and a second abutment surface (16), wherein the bottom connecting surface (17) connects the first abutment surface (15) and the second abutment surface (16), and
wherein the second abutment surface (16) is spaced from the first abutment surface (15) in a direction parallel to the longitudinal edges (7, 8);

a side surface (6) connecting the top surface (4) and the bottom surface (5),
wherein an intersection of the top surface (4) and the side surface (6) forms first and second cutting edges positioned along the transverse edges (9, 10) of the top surface (4);

**characterized in that**
each of the first and second abutment surfaces (15, 16) comprises a surface normal (18, 19), which surface normal (18, 19) forms an angle of 5 degrees or more with the axis of symmetry (11) such that the first and second abutment surfaces (15, 16) define a convex basic shape of the bottom surface (5), wherein the angle is measured in a cross-sectional plane parallel to the axis of symmetry (11) and parallel to the longitudinal edges (7, 8).

2. The indexable cutting insert (1) according to the previous claim, wherein the angle ($\alpha$) between the surface normal (34) and the axis of symmetry (11) is no more than 20 degrees.

3. The indexable cutting insert (1) according to any one of the previous claims, wherein the first and second abutment surfaces (15, 16) are linear in the cross-sectional plane parallel to the axis of symmetry (11) and parallel to the longitudinal edges (7, 8).

4. The indexable cutting insert (1) according to any of the previous claims, wherein the bottom connecting surface (17) is at least in a section convexly curved.

5. The indexable cutting insert (1) according to any one of the previous claims, wherein the first and second mounting surfaces (12, 13) in the cross-sectional plane parallel to the axis of symmetry (11) and parallel to the longitudinal edges (7, 8) are linear.

6. The indexable cutting insert (1) according to the previous claim, wherein the first and second mounting surfaces (12, 13) each form an angle (β) of 90 degrees or less with the axis of symmetry (11), so that the first and second mounting surfaces (12, 13) define a flat or concave basic shape of the top surface (4), wherein the angle is measured in a cross-sectional plane parallel to the axis of symmetry (11) and parallel to the longitudinal edges (7, 8).

7. A tool holder (2) for turning, the tool holder (2) comprising

a shaft (24);
a clamping finger (25),
wherein the clamping finger (25) comprises a first clamping surface (30) and a second clamping surface (31) spaced from the first clamping surface (30); and
an insert seating surface (26) for supporting a bottom surface (5) of an indexable cutting insert (1),
wherein the insert seating surface (1) comprises a first contact surface (32) and a second contact surface (33) spaced from the first contact surface (32);

**characterized in that**
each of the first and second contact surfaces (32, 33) comprises a surface normal (34), which surface normals (34) in a cross-sectional plane intersecting the clamping finger (25) and the insert seating surface (26) form an angle of 170 degrees or less with each other such that the first and second contact surfaces (32, 33) define a concave basic shape of the insert seating surface (26).

8. The tool holder (2) according to the previous claim, wherein the first contact surface (32) is convex in the cross-sectional plane intersecting the clamping finger (25) and the insert seating surface (26).

9. The tool holder (2) according to any one of claims 7 or 8, wherein the second contact surface (33) is linear in the cross-sectional plane intersecting the clamping finger (25) and the insert seating surface (26).

10. A tool (3) for turning comprising the tool holder (2) according to any one of claims 7 to 9 and the indexable cutting insert (1) according to any one of claims 1 to 6,

wherein the bottom surface (5) of the indexable cutting insert (1) is received on the insert seating surface (26) of the tool holder (2) such that the first abutment surface (15) is engaged with the first contact surface (32) and the second abutment surface (16) is engaged with the second contact surface (33); and
wherein the first clamping surface (30) of the clamping finger (25) is engaged with the first mounting surface (12) of the top surface (4) of the cutting insert (1) and the second clamping surface (31) is engaged with the second mounting surface (13).

11. The tool (3) according to the previous claim, wherein the first abutment surface (15) and the first contact surface (32) are arranged and positioned such that a first contact along a line is established, and wherein the second abutment surface (16) and the second contact surface (33) are arranged and positioned such that a second contact along a line is established.

12. The tool (3) according to any one of claims 10 or 11, wherein a first contact established between the first abutment surface (15) of the cutting insert (1) and the first contact surface (32) of the tool holder (2) and a second contact established between the second abutment surface (16) of the cutting insert (1) and the second contact surface (33) of the tool holder (2) are the only contacts of the bottom surface (5) of the cutting insert (1) and the insert seating surface (26) of the tool holder (2).

13. The tool (3) according to any one of claims 10 to 12,

wherein the tool (3) comprises an abutment distance (D1) between a point or a line of contact of the first abutment surface (15) with the first contact surface (32) and a point or a line of contact of the second abutment surface (16) with the second contact surface (33) in a direction parallel to the longitudinal edges (7, 8), and wherein the abutment distance (D1) is larger than three quarters of a cutting edge distance ($d_c$) between the first cutting edge (9) and the second cutting edge (10) in a direction parallel to the longitudinal edges (7, 8).

14. The tool (3) according to any one of claims 10 to 13,

wherein the tool (3) comprises a mounting distance (D2) between a point or a line of contact of the first mounting surface (12) with the first clamping surface (30) and a point or a line of contact of the second mounting surface (13) with the second clamping surface (31) in a direction parallel to the longitudinal edges (7, 8), and wherein the mounting distance (D2) is larger than three quarters of a cutting edge distance ($d_c$) between the first cutting edge (9) and the second cutting edge (10) in a direction parallel to the longitudinal edges (7, 8).

15. The tool (3) according to any one of claims 10 to 14, wherein the tool holder (2) comprises a stop surface (27), wherein the stop surface (27) is engaged with the side surface (6) of the cutting insert (1).

Fig. 1

Fig. 2

**Fig. 3**

**Fig. 4**

**Fig. 5**

**Fig. 6**

**Fig. 7**

**Fig. 8**

A - A

35    35

1

21

21

29

**Fig. 9**

36  13
13
1

10

7    4

12  12

8

9

6    5

**Fig. 10**

**Fig. 11**

**Fig. 12**

3

24

28

25

1

23

2

**Fig. 13**

25

28

32 26 33 27

30

31

29

2

**Fig. 14**

25

33

26

32

27

**Fig. 15**

29

9  32

11  33  10

30

15

1

31

16

**Fig. 16**

36

37

9

1

29

37

36

**Fig. 17**

32          32

1

29

15

15

**Fig. 18**

Europäisches
Patentamt
European
Patent Office
Office européen
des brevets

# EUROPEAN SEARCH REPORT

**Application Number**

EP 24 22 1403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 709 737 A (JONSSON KARL-ERIK A [SE]) 1 December 1987 (1987-12-01) | 1-6 | INV. B23B27/04 B23B29/04 |
| A | * column 1, line 49 - column 4, line 42 * * figures 1,2 * | 7-15 | |
| X | PL 441 837 A1 (KOZAK DARIUSZ P H M POLCOMM [PL]) 29 January 2024 (2024-01-29) | 7-9 | |
| A | * the whole document * | 1-6, 10-15 | |
| X | JP 2 559976 Y2 (XXX) 19 January 1998 (1998-01-19) | 1-6 | |
| A | * figures 1,2 * | 7-15 | |
| A | US 2012/099935 A1 (HECHT GIL [IL]) 26 April 2012 (2012-04-26) * the whole document * | 1-6 | |

**TECHNICAL FIELDS SEARCHED (IPC)**

B23B

The present search report has been drawn up for all claims

| Place of search | Date of completion of the search | Examiner |
|---|---|---|
| Munich | 28 May 2025 | Schulz, Andreas |

EPO FORM 1503 03.82 (P4C01)

## ANNEX TO THE EUROPEAN SEARCH REPORT
## ON EUROPEAN PATENT APPLICATION NO.

EP 24 22 1403

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| US 4709737 | A | 01-12-1987 | NONE | | |
| PL 441837 | A1 | 29-01-2024 | -------- | | |
| JP 2559976 | Y2 | 19-01-1998 | JP | 2559976 Y2 | 19-01-1998 |
| | | | JP | H0457302 U | 18-05-1992 |
| US 2012099935 | A1 | 26-04-2012 | BR | 112013006947 A2 | 26-07-2016 |
| | | | CA | 2810298 A1 | 26-04-2012 |
| | | | CN | 103153506 A | 12-06-2013 |
| | | | EP | 2629914 A1 | 28-08-2013 |
| | | | EP | 3195963 A1 | 26-07-2017 |
| | | | ES | 2633722 T3 | 25-09-2017 |
| | | | ES | 2890599 T3 | 20-01-2022 |
| | | | IL | 208826 A | 29-02-2016 |
| | | | JP | 6080765 B2 | 15-02-2017 |
| | | | JP | 2013540058 A | 31-10-2013 |
| | | | KR | 20140002631 A | 08-01-2014 |
| | | | PL | 2629914 T3 | 29-09-2017 |
| | | | PL | 3195963 T3 | 27-12-2021 |
| | | | PT | 2629914 T | 23-06-2017 |
| | | | PT | 3195963 T | 15-09-2021 |
| | | | RU | 2013122884 A | 20-12-2014 |
| | | | US | 2012099935 A1 | 26-04-2012 |
| | | | WO | 2012052984 A1 | 26-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4275821 A1